# EUROPEAN PATENT SPECIFICATION

(11) **EP 2 161 187 B1**
(45) Date of publication and mention of the grant of the patent: **14.11.2012**
(21) Application number: 09010137.9
(22) Date of filing: 05.08.2009
(51) Int. Cl.: B62J 17/02

(54) **Motorcycle**
Motorrad
Motocyclette

(30) Priority: 05.09.2008 JP 2008229098
(43) Date of publication of application: 10.03.2010
(73) Proprietor: Yamaha Hatsudoki Kabushiki Kaisha, Shizuoka-ken Shizuoka 438-8501 (JP)
(72) Inventor: Imamura, Mitsutoshi, Iwata-shi Shizuoka-ken 438-8501 (JP); Sumi, Takahiro, Iwata-shi Shizuoka-ken 438-8501 (JP)
(74) Representative: Schoppe, Fritz

(56) References cited:
- JP-A- 2008 087 595
- JP-U- 55 092 023
- US-A1- 2007 056 790
- US-A1- 2008 012 391

## Description

### BACKGROUND OF THE INVENTION

### Field of the Invention

The present invention relates to motorcycles.

### Description of Related Art

Conventionally, a motorcycle that has a side cowl for covering the sides of a front portion of the vehicle body has been known. A motorcycle that has a side cowl provided with air exhaust ports for exhausting hot air inside the side cowl is also known (see, for example, Japanese Examined Utility Model Publication No. 2-11266).

In the motorcycle disclosed in Japanese Examined Utility Model Publication No. 2-11266, the air exhaust ports are formed at mid positions of the longitudinal axis of the side cowl.

US 2007/056790 A1 describes a motorcycle according to the preamble of claim 1. The motorcycle includes an exhaust device connected to an engine unit. The exhaust device includes a plurality of first exhaust pipes forwardly extending from an exhaust port which opens in the front of the engine unit; a joint portion for joining the first exhaust pipes; a second exhaust pipe connected to a downstream side of the joint portion and passing below an oil pan disposed in a lower portion of the engine unit; and an exhaust expansion chamber connected to a downstream portion of the second exhaust pipe. A cowling of such a motorcycle includes a front cowling covering the engine unit and the exhaust device from lower and side portions thereof; and a rear cowling partially covering a rider's seat. The front cowling is formed with an air-exhaust opening at a bottom surface of a rear end thereof positioned to a front lower surface of the exhaust expansion chamber.

US 2008/012391 A1 describes a cowling structure for a motorcycle in which a radiator is disposed behind a front wheel of the motorcycle. The cowling structure includes a main cowling and a sub cowling. The main cowling covers a periphery of the radiator from the front of a handlebar. The sub cowling is provided in the rear of the cowling through a space. The sub cowling is separate from the cowling. The cowling structure allows wind to effectively hit a radiator, and reduces a force necessary for inclining a vehicle body at the time of cornering.

JP 55/092023 U describes a motorcycle having a front cowling.

JP 2008-087595 A describes a motorcycle ensuring a sufficient space between a front part of a body part and a driver. A seat sitting with the driver D is arranged at the rearmost part of the body part of the motorcycle and at an upper part position along a vertical direction of a rear wheel. A cowl constituted by an impact absorption structure body for surrounding a front part and both side parts of the body part and covering at least a shoulder part, a waist part and a lower leg part of the driver is provided.

### BRIEF SUMMARY OF THE INVENTION

It is an object of the invention to provide a motorcycle that can achieve both smooth exhausting of the hot air in the side cowl and an improvement in the aerodynamic characteristics.

This object is achieved by a motor cycle of claim 1.

The present invention makes available a motorcycle that can achieve both smooth exhausting of the hot air in the side cowl and an improvement in the aerodynamic characteristics.

### BRIEF DESCRIPTION OF THE DRAWINGS

Fig. 1 is a side view illustrating a motorcycle according to one embodiment of the invention;
Fig. 2 is a transverse cross-sectional view illustrating an oblique frame portion of a main frame;
Fig. 3 is a front view illustrating a motorcycle according to one embodiment of the invention; and
Fig. 4 is a horizontal cross-sectional view along a horizontal line, illustrating the interior of a side cowl.

### DETAILED DESCRIPTION OF THE INVENTION

### Overall Structure of the Motorcycle

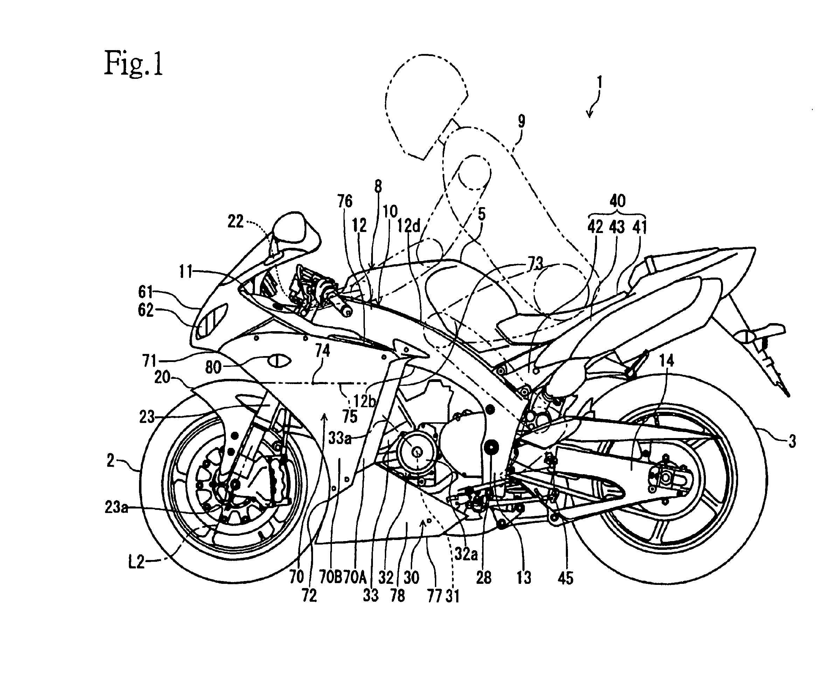

As illustrated in Fig. 1, a motorcycle 1 according to one embodiment is what is called a sport-type motorcycle. The motorcycle 1 has a front wheel 2, a rear wheel 3, a vehicle body 8, and a power unit 30.

A front fender 20 is provided for the front wheel 2. The front wheel 2 is supported by a front fork 23. The front fork 23 is supported by the vehicle body 8. A steering shaft 22 is coupled to the front fork 23. The steering shaft 22 is supported rotatably by the head pipe 11.

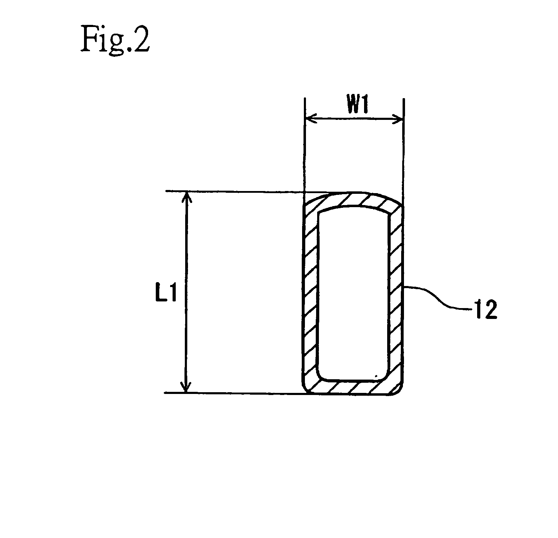

The vehicle body 8 has a main frame 10. The main frame 10 has a head pipe 11, an oblique frame portion 12 extending, as viewed from a side of the motorcycle, obliquely downward and rearward from the head pipe 11, and a lower frame portion 13 extending downward from the oblique frame portion 12. As illustrated in Fig. 2, the oblique frame portion 12 has a transverse cross-sectional shape such that a width L1 thereof along a vertical direction (i.e., a direction orthogonal to a lateral direction) is greater than a width W1 thereof along the lateral direction.

A pivot shaft 28, which is a swing shaft, is provided on the lower frame portion 13. A rear arm 14 is mounted pivotably on the pivot shaft 28. That is, the front end portion of the rear arm 14 is fitted pivotably to the main frame 10 with the pivot shaft 28. A rear wheel 3 is supported rotatably at the rear end of the rear arm 14.

The power unit 30 is supported by the main frame 10. The power unit 30 is disposed below the oblique frame portion 12 and in front of the lower frame portion 13, as viewed from a side of the motorcycle. The power unit 30 has a casing 32 for enclosing an engine, a clutch, a transmission, and so forth, which are not shown in the figures, and a cylinder 33 extending obliquely forward and upward from the casing 32. Reference numeral 31 in Fig. 1 denotes a crank shaft of the engine. The crank shaft 31 extends laterally. The crank shaft 31 is disposed in the casing 32. The casing 32 has a cover portion 32a located on an extended line of the crank shaft 31. The cover portion 32a may be integrated with other parts of the casing 32 or may be formed separately. In the present embodiment, the cover portion 32a comprises a cover for covering a flywheel magnet (not shown), and it is formed separately from other parts of the casing 32.

As viewed from one side of the motorcycle, a seat unit 40 is disposed above the rear arm 14. The seat unit 40 has a seat 41 on which a rider 9 is to be seated, a rear frame 42 supported by the main frame 10, and a rear side cover 43 for covering the sides of the rear frame 42.

A footrest 45 serving as a foot mounting part is disposed at the rear of the lower frame portion 13. A fuel tank 5 is provided above the oblique frame portion 12 and in front of the seat 41.

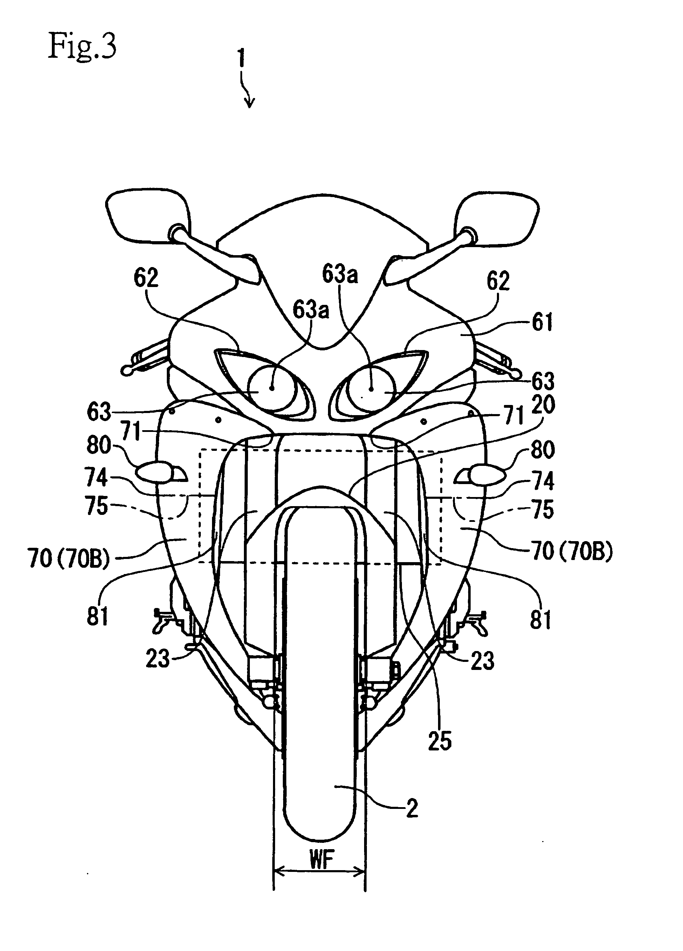

A front cowl 61 is provided in front of the vehicle body 8 and above the front wheel 2. As illustrated in Fig. 3, the front cowl 61 has a pair of left and right openings 62. A headlight 63 is provided in each of the openings 62.

### Side cowl

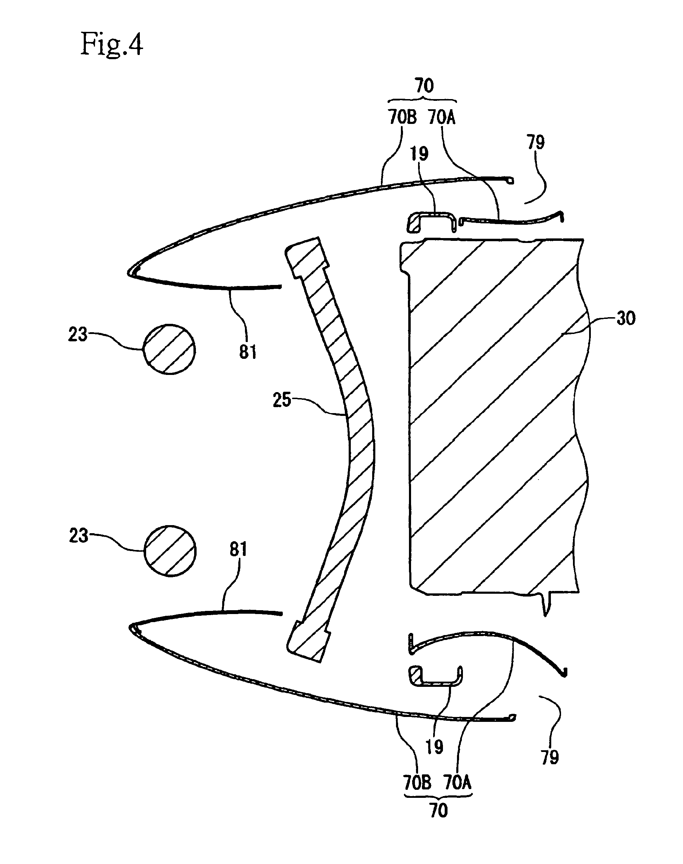

As illustrated in Fig. 3, the motorcycle 1 has a pair of left and right side cowls 70 supported by the vehicle body 8. As illustrated in Fig. 1, each of the side cowls 70 has an inner side cowl 70A located inward as seen in the transverse direction of the vehicle, and an outer side cowl 70B located outward of the inner side cowl 70A as seen in the transverse direction of the vehicle. As viewed from a side of the motorcycle, the outer side cowl 70B is formed in a substantially triangular shape. As illustrated in Fig. 4, a gap 79 is formed between a rear edge of the inner side cowl 70A and a rear edge of the outer side cowl 70B. Part of the air that has flowed from the front into the interior of the outer side cowl 70B passes through the gap 79 and flows out of the outer side cowl 70B.

As illustrated in Fig. 1, as viewed from a side of the motorcycle, a front edge portion 71 of each side cowl 70 is located higher up than the front wheel 2 and more forward than a front end 23a (i.e., the forwardmost portion of the front fork 23 extending obliquely) of the front fork 23. A lower edge portion 72 of each side cowl 70 is located at the rear of the front wheel 2 and downward relative to the crank shaft 31. A rear edge 73 of each side cowl 70 extends vertically across the cylinder 33 and in front of the cover portion 32a. It should be noted that the phrase "extend vertically" is meant to include the cases in which a part or component extends in a direction inclined from the vertical direction. An under cowl 78 is provided below the side cowls 70, as viewed from a side of the motorcycle.

As illustrated in Fig. 1, as viewed from a side of the motorcycle, each of the side cowls 70 has no opening piercing through the side cowls in a lateral direction. It should be noted that the opening here means an opening through which air can pass through, and it does not include bolt holes and the like for attaching the side cowls 70.

Reference numeral 74 in Figs. 1 and 3 denotes a portion, which is outermost as seen in the transverse direction of the vehicle, of each of the side cowls 70, as viewed from the front (see Fig. 3). Reference numeral 75 denotes a horizontal line containing the portion 74. As illustrated in Fig. 3, the surface of each of the side cowls 70 along the horizontal line 75, as viewed from the front, is formed by a continuous smooth surface. Thus, no opening or surface level difference is formed in the surface along the horizontal line 75, as viewed from the front.

As illustrated in Fig. 1, at least a portion of an upper edge 76 in a rear portion of each side cowl 70 overlaps with the oblique frame portion 12 of the main frame 10, as viewed from a side of the motorcycle. Moreover, the upper edge 76 of each side cowl 70 is located closer to an upper edge 12d of the oblique frame portion 12 as it approaches the rear end, as viewed from a side of the motorcycle. In addition, at least a portion of the rear edge 73 of each side cowl 70 is substantially parallel to a longitudinal axis L2 of the front fork 23, and intersects an axis 33a of the cylinder 33, as viewed from a side of the motorcycle. Furthermore, a portion of the upper edge 76 of each side cowl 70 is substantially parallel to a lower edge 12b of the oblique frame portion 12, as viewed from a side of the motorcycle. It should be noted that a lower edge 77 of the under cowl 78 extends further to the rear than the cover portion 32a of the casing 32, as viewed from a side of the motorcycle.

As illustrated in Fig. 3, the front edge portion 71 of each of the left and right side cowls 70 is also an inner side edge portion that is located most inward as seen in the transverse direction of the vehicle. As illustrated in Fig. 3, the inner side edge portions 71 of the left and right side cowls 70 are located more inward, as seen in the transverse direction of the vehicle, than centers 63a of the left and right headlights 63, as viewed from the front. In other words, the side cowls 70 are extended more inward than the centers 63a of the headlights 63. In addition, the interval between the inner side edge portions 71 of the left and right side cowls 70 is substantially equal to the inner width WF of the front fender 20.

As illustrated in Fig. 4, an inner panel 81 is fitted to the inside of the front portion of each outer side cowl 70B. The inner panels 81 are located outward of the front fork 23 as seen in the transverse direction of the vehicle. A radiator 25 is disposed at the rear of the front fork 23 and inside the outer side cowl 70B. The radiator 25 is disposed between the left and right side cowls 70 and in front of the power unit 30. Reference numeral 19 represents a frame. As illustrated in Figs. 1 and 3, flashers 80 are fitted on the outer sides of the outer side cowls 70B.

### Advantageous Effects of the Embodiment

As described above, in the motorcycle 1 according to the present embodiment, the front edge portion 71 of each of the side cowls 70 is located higher up than the front wheel 2 and more forward than the front end 23a of the front fork 23, as viewed from a side of the motorcycle (see Fig. 1). For this reason, the motorcycle 1 is capable of taking air into the interior of the side cowls 70 from more forward locations. Moreover, the airflow that hits the front cowl 61 is allowed to enter from more forward locations into the interior of the side cowls 70. Therefore, the motorcycle 1 can introduce air into the interior of the side cowls 70 more easily. Furthermore, in the motorcycle 1, the lower edge portion 72 of each side cowl 70 is located lower down than the crank shaft 31. For this reason, the vertical length of the side cowls 70 is large, so a sufficient amount of air can be introduced into the interior of the side cowls 70. What is more, in the motorcycle 1, the rear edge 73 of each side cowl 70 extends vertically across the cylinder 33 of the power unit 30 and in front of the cover portion 32a. As a result, a relatively large space is formed between the side faces of the power unit 30 and the side cowls 70, so the air introduced in the interior of the side cowls 70 can be guided outside easily.

Because of the synergistic effects of the just-described mechanisms, the air introduced in the interior of the side cowls 70 can be exhausted to the outside smoothly in the motorcycle 1 according to the present embodiment. Thus, the hot air inside the side cowls 70 can be exhausted smoothly. Moreover, each of the side cowls 70 has no opening piercing through the side cowls in a lateral direction, as viewed from a side of the motorcycle (see Fig. 1), and the surface thereof along the horizontal line 75 containing the portion 74 which is outermost as seen in the transverse direction of the vehicle, as viewed from the front (see Fig. 3), is formed by a continuous smooth surface. As a result, the aerodynamic characteristics of the motorcycle 1 improve. Thus, the motorcycle 1 according to the present embodiment can achieve both smooth exhausting of hot air in the side cowls 70 and an improvement in aerodynamic characteristics.

In the present embodiment, at least a portion of the upper edge 76 in a rear portion of each side cowl 70 overlaps with the oblique frame portion 12 of the main frame 10, as viewed from a side of the motorcycle. This makes it possible to improve the aerodynamic characteristics of the motorcycle 1 over the case in which a gap is formed between the upper edge 76 of each side cowl 70 and the oblique frame portion 12.

In addition, in the present embodiment, the upper edge 76 of each side cowl 70 is located closer to the upper edge 12d of the oblique frame portion 12 as it approaches the rear end, as viewed from a side of the motorcycle. In other words, the upper edge 76 of each side cowl 70 is located farther from the upper edge 12d of the oblique frame portion 12 as it approaches the front end. From the viewpoint of steering operations of the rider 9, it is desirable that sufficient vertical spacing be ensured between the upper edges 76 of the side cowls 70 and the upper edges 12d of the oblique frame portions 12 in a front area of the side cowls 70. According to the present embodiment, the aerodynamic characteristics can be improved while ensuring sufficient spacing between the upper edges 76 of the side cowls 70 and the upper edges 12d of the oblique frame portions 12 in the front area of the side cowls 70.

In the present embodiment, the oblique frame portion 12 has a transverse cross-sectional shape in which the width L1 thereof along a direction orthogonal to a lateral direction (i.e., along a vertical direction) is greater than the width W1 thereof along the lateral direction (see Fig. 2). Thereby, the area of the oblique frame portion 12 becomes relatively large, as viewed from a side of the motorcycle. Therefore, the area of each of the side cowls 70 can be made smaller corresponding to the increase of the area of the oblique frame portion 12. The present embodiment allows the size of the side cowls 70 to be made smaller.

In the present embodiment, at least a portion of the rear edge 73 of each side cowl 70 is substantially parallel to the longitudinal axis L2 of the front fork 23, and intersects the axis 33a of the cylinder 33, as viewed from a side of the motorcycle. This allows the hot air inside the side cowls 70 to exhaust more smoothly. Moreover, the aerodynamic characteristics can be improved.

In the present embodiment, a portion of the upper edge 76 of each side cowl 70 is substantially parallel to the lower edge 12b of the oblique frame portion 12, as viewed from a side of the motorcycle. This makes it possible to improve the aerodynamic characteristics of the motorcycle 1.

As illustrated in Fig. 3, according to the present embodiment, the inner side edge portions 71 of the left and right side cowls 70 are located more inward, as seen in the transverse direction of the vehicle, than the centers 63a of the left and right headlights 63, as viewed from the front. Since the side cowls 70 extend more inward in this way, as seen in the transverse direction of the vehicle of the vehicle, the aerodynamic characteristics can be improved further.

The power unit 30 of the motorcycle 1 according to the present embodiment has a water-cooled engine, so the radiator 25 is disposed between the left and right side cowls 70 and in front of the power unit 30. In the motorcycle 1 provided with a water-cooled engine, hot air tends to stay behind the radiator 25. For this reason, the above-described advantageous effect of smooth exhausting of the hot air in the side cowls 70 is more significant in the motorcycle 1.

It should be noted that the lower edge 77 of the under cowl 78 extends rearward relative to the cover portion 32a of the casing 32, as viewed from a side of the motorcycle. Thereby, further improvements in the aerodynamic characteristics can be achieved.

As illustrated in Fig. 1, the gap between the inner side cowl 70A and the outer side cowl 70B comprises an air exhaust port in the present embodiment. The air exhaust port extends obliquely downward and rearward. In addition, the air exhaust port is located considerably more forward of the footrest 45. As a result, it is possible to sufficiently prevent the hot air exhausted from the side cowls 70 from blowing onto the knees and feet of the rider 9.
Only selected embodiments have been chosen to illustrate the present invention. To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims and their equivalents.

## Claims

1. A motorcycle comprising:
a front wheel (2);
a front fork (23) for supporting the front wheel (2);
a vehicle body (8) for supporting the front fork (23);
a power unit (30) disposed at the rear of the front wheel (2) and supported by the vehicle body (8), the power unit (30) comprising a crank shaft (31) extending laterally, a casing (32) having a cover portion (32a) located on an extended line of the crank shaft (31), and a cylinder (33) extending forward and obliquely upward from the casing (32); and
left and right side cowls (70) supported by the vehicle body (8), wherein:
a front edge portion (71) of each of the side cowls (70) is located higher up than the front wheel (2), as viewed from a side of the motorcycle, and a lower edge portion (72) of each of the side cowls (70) is located lower down than the crank shaft (31), and a rear edge (73) of each of the side cowls (70) extends vertically across the cylinder (33) and in front of the cover portion (32a); each of the side cowls (70) has no opening, through which air can pass, piercing through the side cowls (70) in a lateral direction, and a surface of each of the side cowls (70) along a horizontal line (75) containing a portion (74) thereof which is outermost as seen in a transverse direction of the vehicle, as viewed from the front, is formed by a continuous smooth surface;
**characterized in that**
the front edge portion (71) of each of the side cowls (70) is located more forward than a front end of the front fork (23), as viewed from the side of the motorcycle;
each of the side cowls (70) has an inner side cowl (70A) located inward as seen in the transverse direction of the vehicle, and an outer side cowl (70B) located outward, as seen in the transverse direction of the vehicle, of the inner side cowl (70A) in a rear edge portion containing the rear edge (73); and
a gap (79) is formed between the rear edge of the inner side cowl (70A) and the rear edge of the outer side cowl (70B).

2. The motorcycle according to claim 1, further comprising:
a steering shaft (22) coupled to the front fork (23), and wherein:
the vehicle body (8) has a head pipe (11) for supporting the steering shaft (22) rotatably, and an oblique frame portion (12) extending obliquely downward and rearward from the head pipe (11), as viewed from the side of the motorcycle; and
at least a portion of an upper edge (76) of a rear portion of each of the side cowls (70) overlaps with the oblique frame portion (12), as viewed from the side of the motorcycle.

3. The motorcycle according to claim 2, wherein the upper edge (76) of each of the side cowls (70) is located closer to an upper edge (12d) of the oblique frame portion (12) as it approaches a rear end thereof.

4. The motorcycle according to claim 2, wherein the oblique frame portion (12) has a transverse cross-sectional shape such that a width (L1) thereof along a direction orthogonal to the lateral direction is greater than a width (W1) thereof along the lateral direction.

5. The motorcycle according to claim 1, wherein at least a portion of the rear edge (73) of each of the side cowls (70) is substantially parallel to a longitudinal axis (L2) of the front fork (23), and intersects an axis (33a) of the cylinder (33), as viewed from the side of the motorcycle.

6. The motorcycle according to claim 1, further comprising:
a steering shaft (22) coupled to the front fork (23), and wherein:
the vehicle body (8) has a head pipe (11) for supporting the steering shaft (22) rotatably, and an oblique frame portion (12) extending obliquely downward and rearward from the head pipe (11), as viewed from the side of the motorcycle; and
a portion of an upper edge (76) of each of the side cowls (70) is substantially parallel to a lower edge (12b) of the oblique frame portion (12), as viewed from the side of the motorcycle.

7. The motorcycle according to claim 1, further comprising:
a pair of left and right headlights (63), and wherein
inner side edge portions of the left and right side cowls (70) are located more inward, as seen in the transverse direction of the vehicle, than centers (63a) of the left and right headlights (63), respectively.

8. The motorcycle according to claim 1, further comprising a radiator (25) disposed between the left and right side cowls (70) and in front of the power unit (30).

## Patentansprüche

1. Ein Motorrad, das folgende Merkmale aufweist:
ein Vorderrad (2);
eine Vordergabel (23) zum Tragen des Vorderrads (2);
einen Fahrzeugkörper (8) zum Tragen der Vordergabel (23);
eine Leistungseinheit (30), die hinter dem Vorderrad (2) angeordnet ist und durch den Fahrzeugkörper (8) getragen wird, wobei die Leistungseinheit (30) eine Kurbelwelle (31), die sich quer erstreckt, ein Gehäuse (32) mit einem Abdeckungsabschnitt (32a), das auf einer verlängerten Linie der Kurbelwelle (31) angeordnet ist, und einen Zylinder (33) aufweist, der sich von dem Gehäuse (32) nach vorne und schräg nach oben erstreckt; und
eine linke und rechte Seitenverkleidung (70), die durch den Fahrzeugkörper (8) getragen werden, wobei:
ein vorderer Randabschnitt (71) von jeder der Seitenverkleidungen (70) höher angeordnet ist als das Vorderrad (2), von einer Seite des Motorrads aus gesehen, und ein unterer Randabschnitt (72) von jeder der Seitenverkleidungen (70) weiter unten angeordnet ist als die Kurbelwelle (31), und ein hinterer Rand (73) von jeder der Seitenverkleidungen (70) sich vertikal über den Zylinder (33) und vor dem Abdeckungsabschnitt (32a) erstreckt;
wobei keine der Seitenabdeckungen (70) eine Öffnung aufweist, durch die Luft strömen kann, die in einer Querrichtung durch die Seitenabdeckungen (70) dringt,
und eine Oberfläche von jeder der Seitenverkleidungen (70) entlang einer horizontalen Linie (75), die einen Abschnitt (74) derselben enthält, der von einer Querrichtung des Fahrzeugs aus betrachtet am weitesten außen liegt, von vorne gesehen durch eine kontinuierliche glatte Oberfläche gebildet wird;
**dadurch gekennzeichnet, dass**
der vordere Randabschnitt (71) von jeder der Seitenverkleidungen (70) weiter vorne angeordnet ist als ein Vorderende der Vordergabel (23), von der Seite des Motorrads aus gesehen;
wobei jede der Seitenverkleidungen (70) eine innere Seitenverkleidung (70A) aufweist, die von der Querrichtung des Fahrzeugs aus gesehen nach innen angeordnet ist, und eine äußere Seitenverkleidung (70B), die von der Querrichtung des Fahrzeugs aus gesehen nach außen angeordnet ist von der inneren Seitenverkleidung (70A) in einem hinteren Randabschnitt, der den hinteren Rand (73) enthält, und
ein Zwischenraum (79) zwischen dem hinteren Rand der inneren Seitenverkleidung (70A) und dem hinteren Rand der äußeren Seitenverkleidung (70B) gebildet ist.

2. Das Motorrad gemäß Anspruch 1, das ferner folgende Merkmale aufweist:
eine Lenkwelle (22), die mit der Vordergabel (23) gekoppelt ist, und wobei:
der Fahrzeugkörper (8) ein Hauptrohr (11) zum drehbaren Tragen der Lenkwelle (22) und einen schrägen Rahmenabschnitt (12) aufweist, der sich von dem Hauptrohr (11) schräg nach unten und nach hinten erstreckt, von der Seite des Motorrads aus gesehen; und
zumindest ein Teil eines oberen Rands (76) eines hinteren Abschnitts von jeder der Seitenverkleidungen (70) den schrägen Rahmenabschnitt (12) überlappt, von der Seite des Motorrads aus gesehen.

3. Das Motorrad gemäß Anspruch 2, bei dem der obere Rand (76) von jeder der Seitenverkleidungen (70) näher zu einem oberen Rand (12d) des schrägen Rahmenabschnitts (12) angeordnet ist, während sich derselbe einem hinteren Ende desselben nähert.

4. Das Motorrad gemäß Anspruch 2, bei dem der schräge Rahmenabschnitt (12) eine transversale Querschnittsform aufweist, so dass eine Breite (L1) desselben entlang einer Richtung orthogonal zu der Querrichtung größer ist als eine Breite (W1) desselben entlang der Querrichtung.

5. Das Motorrad gemäß Anspruch 1, bei dem zumindest ein Teil des hinteren Rands (73) von jeder der Seitenverkleidungen (70) im Wesentlichen parallel ist zu einer Längsachse (L2) der Vordergabel (23), und eine Achse (33a) des Zylinders (33) schneidet, von der Seite des Motorrads aus gesehen.

6. Das Motorrad gemäß Anspruch 1, das ferner folgende Merkmale aufweist:
eine Lenkwelle (22), die mit der Vordergabel (23) gekoppelt ist, und wobei:
der Fahrzeugkörper (8) ein Hauptrohr (11) zum drehbaren Tragen der Lenkwelle (22) und einen schrägen Rahmenabschnitt (12) aufweist, der sich von dem Hauptrohr (11) schräg nach unten und nach hinten erstreckt, von der Seite des Motorrads aus gesehen; und
ein Teil eines oberen Rands (76) von jeder der Seitenverkleidungen (70) im Wesentlichen parallel ist zu einem unteren Rand (12b) des schrägen Rahmenabschnitts (12), von der Seite des Motorrads aus gesehen.

7. Das Motorrad gemäß Anspruch 1, das ferner folgende Merkmale aufweist:
ein Paar von linken und rechten Scheinwerfern (63), und wobei
innere Seitenrandabschnitte der linken und rechten Seitenverkleidung (70) von der Querrichtung des Fahrzeugs aus gesehen weiter nach innen angeordnet sind als Mitten (63a) des linken beziehungsweise rechten Scheinwerfers (63).

8. Das Motorrad gemäß Anspruch 1, das ferner einen Kühler (25) aufweist, der zwischen der linken und rechten Seitenverkleidung (70) und vor der Leistungseinheit (30) angeordnet ist.

## Revendications

1. Motocyclette, comprenant:
une roue avant (2);
une fourche avant (23) destinée à supporter la roue avant (2);
un corps de véhicule (8) destiné à supporter la fourche avant (23);
une unité motrice (30) disposée à l'arrière de la roue avant (2) et supportée par le corps de véhicule (8), l'unité motrice (30) comprenant un vilebrequin (31) s'étendant latéralement, un boîtier (32) présentant une partie de couvercle (32a) située sur une ligne prolongée du vilebrequin (31), et un cylindre (33) s'étendant vers l'avant et obliquement vers le haut depuis le boîtier (32), et
des carénages latéraux gauche et droit (70) supportés par le corps de véhicule (8), où:
une partie de bord avant (71) de chacun des carénages latéraux (70) est située plus haut que la roue avant (2), vu d'un côté de la motocyclette, et une partie de bord inférieure (72) de chacun des carénages latéraux (70) est située plus bas que le vilebrequin (31), et un bord arrière (73) de chacun des carénages latéraux (70) s'étend verticalement sur tout le cylindre (33) et à l'avant de la partie de couvercle (32a);
chacun des carénages latéraux (70) présente aucune ouverture à travers laquelle peut passer de l'air, des perçages dans les carénages latéraux (70) dans une direction latérale, et une surface de chacun des carénages latéraux (70) le long d'une ligne horizontale (75) contenant une partie (74) de celle-ci qui est la plus à l'extérieur, vu dans une direction transversale du véhicule, vu depuis l'avant, est formée par une surface lisse continue;
**caractérisée par le fait que**
la partie de bord avant (71) de chacun des carénages latéraux (70) est située plus à l'avant qu'une extrémité avant de la fourche avant (23), vu du côté de la motocyclette;
chacun des carénages latéraux (70) présente un carénage latéral intérieur (70A) situé vers l'intérieur, vu dans la direction transversale du véhicule, et un carénage latéral extérieur (70B) situé vers l'extérieur, vu dans la direction transversale du véhicule, du carénage latéral intérieur (70A) dans une partie de bord arrière contenant le bord arrière (73); et
un interstice (79) est formé entre le bord arrière du carénage latéral intérieur (70A) et le bord arrière du carénage latéral extérieur (70B).

2. Motocyclette selon la revendication 1, comprenant par ailleurs:
un arbre de guidage (22) couplé à la fourche avant (23), et dans laquelle:
le corps de véhicule (8) présente un tube principal (11) destiné à supporter l'arbre de guidage (22) en rotation, et une partie de châssis oblique (12) s'étendant obliquement vers le bas et vers l'arrière depuis le tube principal (11), vu depuis le côté de la motocyclette, et
au moins une partie d'un bord supérieur (76) d'une partie arrière de chacun des carénages latéraux (70) vient en recouvrement avec la partie de châssis oblique (12), vu depuis le côté de la motocyclette.

3. Motocyclette selon la revendication 2, dans laquelle le bord supérieur (76) de chacun des carénages latéraux (70) est situé plus près d'un bord supérieur (12d) de la partie de châssis oblique (12) au fur et à mesure qu'il se rapproche de son extrémité arrière.

4. Motocyclette selon la revendication 2, dans laquelle la partie de châssis oblique (12) présente une section transversale de forme telle qu'une largeur (L1) de celle-ci le long d'une direction orthogonale à la direction latérale soit supérieure à une largeur (W1) de celle-ci le long de la direction latérale.

5. Motocyclette selon la revendication 1, dans laquelle au moins une partie du bord arrière (73) de chacun des carénages latéraux (70) est sensiblement parallèle à un axe longitudinal (L2) de la fourche avant (23), et vient en intersection avec un axe (33a) du cylindre (33), vu depuis le côté de la motocyclette.

6. Motocyclette selon la revendication 1, comprenant par ailleurs:
un arbre de guidage (22) couplé à la fourche avant (23), et dans laquelle:
le corps de véhicule (8) présente un tube principal (11) destiné à supporter l'arbre de guidage (22) en rotation, et une partie de châssis oblique (12) s'étendant obliquement vers le bas et vers l'arrière depuis le tube principal (11), vu depuis le côté de la motocyclette, et
une partie d'un bord supérieur (76) de chacun des carénages latéraux (70) est sensiblement parallèle à un bord inférieur (12b) de la partie de châssis oblique (12), vu depuis le côté de la motocyclette.

7. Motocyclette selon la revendication 1, comprenant par ailleurs:
une paire de phares gauche et droit (63), et dans laquelle
les parties de bord latéral intérieur des carénages latéraux gauche et droit (70) sont situées plus vers l'intérieur, vu dans la direction transversale du véhicule, que les centres (63a) des phares gauche et droit (63), respectivement.

8. Motocyclette selon la revendication 1, comprenant par ailleurs un radiateur (25) disposé entre les carénages latéraux gauche et droit (70) et à l'avant de l'unité motrice (30).
